# EUROPEAN PATENT SPECIFICATION

(11) **EP 3 337 315 B1**
(45) Date of publication and mention of the grant of the patent: **17.11.2021**
(21) Application number: 16837375.1
(22) Date of filing: 16.08.2016
(51) Int. Cl.: A01K 61/00, A01K 63/04

(54) **METHOD AND SYSTEM FOR EMPTYING A SEA PEN OF MARINE ORGANISMS**
VERFAHREN UND SYSTEM ZUM ENTLEEREN VON MEERESORGANISMEN AUS EINEM MEERESKÄFIG
PROCÉDÉ ET SYSTÈME POUR VIDER UNE CAGE D'ÉLEVAGE D'ORGANISMES MARINS

(30) Priority: 17.08.2015 NO 20151034
(43) Date of publication of application: 27.06.2018
(73) Proprietor: Vangen, Knut, 5114 Tertnes (NO); Vangen, Vidar, 5032 Bergen (NO)
(72) Inventor: Vangen, Knut, 5114 Tertnes (NO); Vangen, Vidar, 5032 Bergen (NO)
(74) Representative: Acapo AS
(86) International application number: PCT/NO2016/050169
(87) International publication number: WO 2017/030445

(56) References cited:
- WO-A1-2014/123427
- CN-U- 204 518 904
- CN-U- 204 518 904
- JP-A- S5 420 887
- US-A- 3 230 967
- US-A- 3 653 358
- US-A- 4 231 873
- US-A- 4 231 873
- US-A- 4 798 168

## Description

The present invention relates to a method and arrangement for emptying of water a closed sea pen with a waterproof sea pen fabric.

The invention especially pertains to removal of marine organisms in water from the sea pen.

### The state of art

The common way to empty a sea pen is to arrange a hose or pipe connected to a pump down into the water inside the sea pen, and then slowly suck up the organisms as a mixture with water into the hose.

When the pumping starts, the sea pen fabric will gradually collapse at the same rate as the water in the closed room is removed. A disadvantage is that one cannot control where the cloth folds, and sometimes the cloth will end up laying over and covering the intake to the hose/pipe and therefore render it non-functional despite there still remaining fish one wishes to remove from the sea pen.

In regards to the state of the art we refer to US-3.653.358, US-4.231.873, NO-175.341 and US-4.798.168.

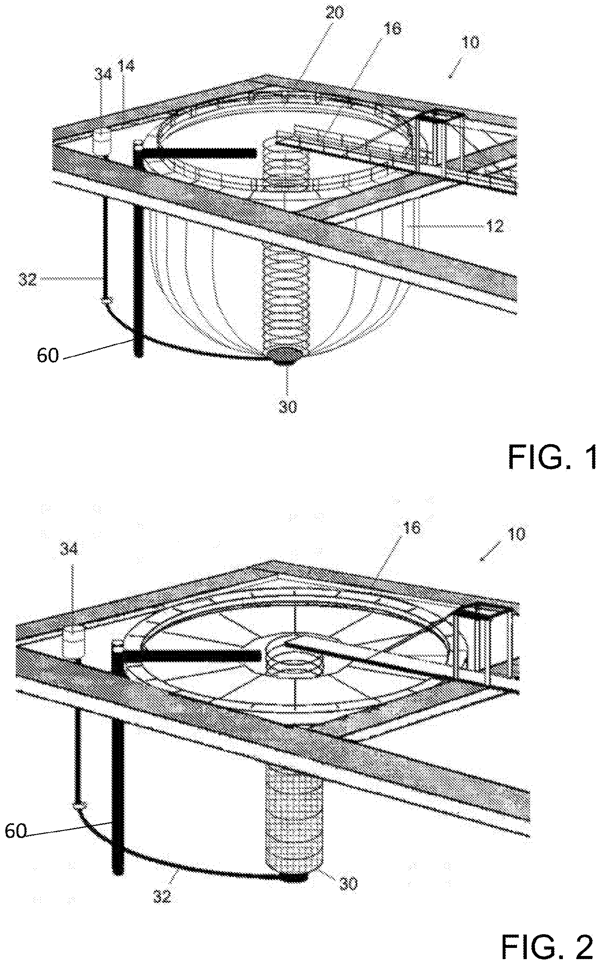

In regards to these publications, US-3.653.358 discloses a container for raising fish, made of a flexible waterproof material. When the fish is harvested the water is pumped out. When the water is removed, the bottom of the flexible material is raised, such that the fish gathers close to the surface. The fish may them be removed by the aid of a net, as is described in the US patents column 1, lines 62-65, column 2, lines 36-40 and in figure 2.

Moreover, CN 204 518 904 U discloses a system for removing water from a fish pond, wherein the system comprises a grid-shaped cage where a pipe or hose with an intake is arranged inside the grid-shaped cage. JP S54 20887 A discloses a method to displace a volume of water from a sea pen of a sea pen fabric, wherein a grid-shaped cage is arranged down in the volume of water inside the sea pen, and the water is withdrawn from the sea pen through a pipe or hose arranged inside of the grid-shaped cage. US 3 230 967 A discloses a method to displace a volume of water from a sea pen of a sealed sea pen fabric, wherein the water is withdrawn from the sea pen through a pipe or hose. WO 2014/123427 A1 discloses a method to displace a volume of water from a sea pen of a sealed sea pen fabric, wherein an outlet basin is arranged down in the volume of water inside the sea pen, and the water is withdrawn from the sea pen through a pipe or hose arranged inside of the outlet basin.

### Objects of the invention.

The object of the present invention is to bring forth a new method and arrangement that eliminates the disadvantages of the known solutions.

### The present invention.

The method according to the present invention defined in claim 1 discloses that a grid cage is arranged down in the volume of water inside the sea pen, and the water is withdrawn from the sea pen through a pipe or hose arranged inside of the grid cage, so that the sea pen fabric is gradually brought to squeeze up against the outside of the grid cage.

According to a preferred embodiment the water is withdrawn from the sea cage by the hose/pipe being connected to a pump on the surface.

According to another preferred embodiment a rigid shaped sea cage is used, where the intake for the hose is mounted centrally inside the grid cage.

It is especially preferred to use a grid cage with openings of a size such that any marine organisms inside the sea pen can easily pass through the openings and into the grid cage, in order to be caught in the water and removed from the sea cage through the hose.

According to yet another preferred embodiment a flexible foldable shaped grid cage is used, which comprises a number of stiff rings mutually connected by lines, and a stiff bottom plate that may be lifted upwards in the final phase of the emptying, towards the intake of the emptying hose, in order to ensure that all present marine organisms are removed from the sea cage through the hose, as there should be a large enough opening between each ring for any marine organisms such as fish in the water volume of the sea pen, to freely enter through the rings and inside the grid cage before the sea cage cloth clings to the outside of the grid cage.

Preferably pipe types in the form of hoses are used, which are delivering pressurized water through a supply hose or pipe running axially and vertically downwards on the outside of the construction, where each ring shaped hose is fluidly connected to the supply hose, so that when it is supplied with pressurized water, the hose links are distended and will maintain the grid at a given stiffness.

It is especially preferred that in order to maintain any requirement for fresh oxygen rich water of any present fish, the emptying of the sea pen is carried out simultaneously with the continual addition of fresh water to the sea pen through a supply pipe, and the emptying process is controlled by changing the ratio between the added and withdrawn water volumes.

The combination according to the invention defined in claim 8 comprises a grid shaped cage where a hose with a intake is arranged inside the grid cage as the hose is connected to a suction pump.

Specially preferred the hose is connected to a pump such as a fish pump, on the surface.

According to a preferred embodiment the arrangement comprises a stiffly shaped grid cage where the hoses/pipes intake is mounted centrally inside the grid cage.

According to a another preferred embodiment the grid cage comprises openings that will let any marine organisms in the sea cage freely through the openings.

Preferably the arrangement comprises a flexible foldable formed grid cage consisting of a number of stiff rings that are mutually connected by lines, and comprises a stiff bottom plate that may be lifted upwards, where there is an opening between each ring of a size that will let any marine organisms like fish in the water volume pass freely through.

### Figure description.

The present invention will now be described in more detail, with reference to the following figures.
Figure 1 shows a perspective of a closed sea pen standing in the sea, with the arrangement mounted, before the emptying process has started.
Figure 2 shows the same as figure 1, but in the final phase of the emptying.
Figure 3 shows a cross-section from the side of the sea pen where the hose with its intake is laying freely in the sea pen.
Figures 4 and 5 shows a cross- section from the side and planar of the situation where the emptying is halfway completed.
Figures 6 and 7 shows the same where the emptying is in the final phase.
Figure 8 shows a perspective of the grid cage according to the present invention.

Even though the invention is directed towards the removal of marine organisms from a sea pen, it may also be used on sea pen without marine organisms, for instance when an empty sea pen is to be removed from the sea.

### Description of preferred embodiments of the invention.

Introductory we refer to figures 1 and 2, which shows a closed sea pen 10 for marine organisms, held afloat standing downwards in the sea 100 hanging in a ring shaped flotation system 20. The surface is shown by number 110. The sea pen 10 forms a bowl shaped closed volume for the organisms, and comprises a completely sealed cloth 12 that isolates the organisms inside the cage room from the sea/water outside the sea pen 10.

Adjacent the surface various equipment to operate the sea pen, are arranged. A ring shaped frame 14 encloses and anchors the sea pen. Means to empty the sea pen may be mounted via a platform 16 extending horizontally out above the sea pen.

Since there is no natural exchange of water by a free flow from the sea pen outside, water is added more the less continuously, something which is carried out in different ways. Water can for example be pumped up from the deep of the sea below the sea pen through a pipe 60 extending down into the sea. Water is pumped upwards through the pipe 60 and is let into the sea pen, as indicated on figures 1 and 2.

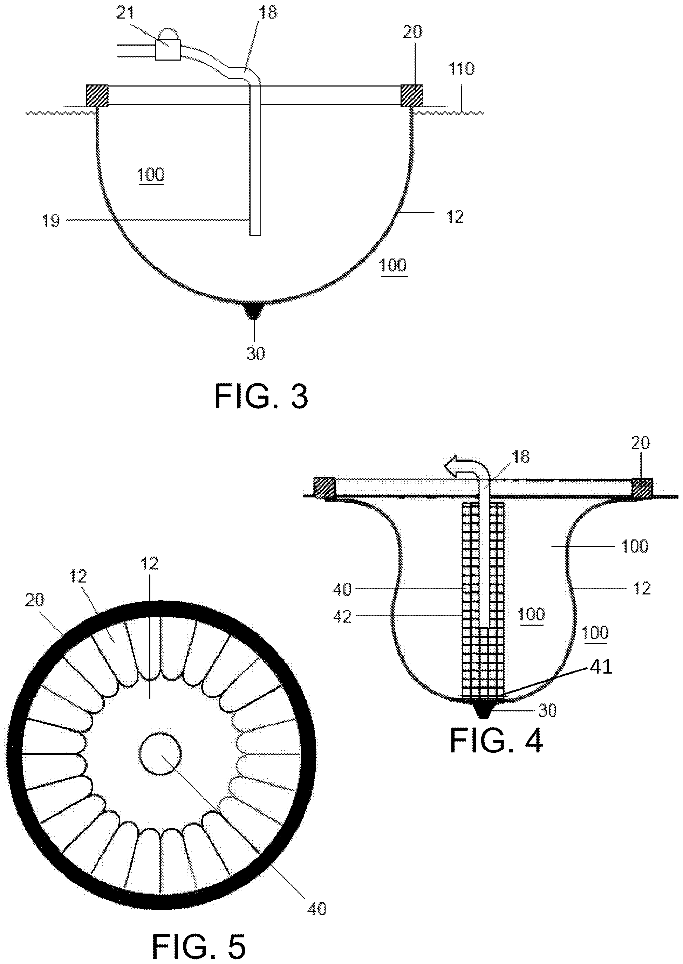

Normally the water is removed from the surface by natural overflow in that the water level inside the sea pen is kept higher than in the sea outside as shown at 110 on figure 3.

Removing the marine organisms, is normally carried out by means of a fish pump 21 connected into a hose 18 that is placed down in the center of the sea pen and when the pump starts and runs, a mixture of water and organisms are sucked up to the surface for further treatment.

At the bottom 30 of the sea pen an outlet connected to a hose 32 extending up to the surface and a pump 34 is arranged, to suck up feed remains, dead organisms (fish) and other waste material that naturally sink to the bottom of the sea pen.

The purpose of the invention is to ensure that all fish is sucked into the hose 18, and more efficiently than with the previous known solutions.

### The present invention.

The known embodiment is shown in figure 3, where the hose 18 with its inlet 19 is positioned freely down into the sea pen.

As shown in figure 4, the suction hose 18 with its inlet nozzle 19, is placed down into a grid cage, a sleeve shaped cage 40 having grid shaped wall parts and a closed bottom 41.The size of the openings 42 of the grid is such (like an analog mask size) that fish freely can swim into or be displaced into the internal space of the cage. As the sea cage is emptied of water by means of the fish pump, the pressure inside the sea pen 12 drops and the sea pen fabric 12 will gradually shrimp and more and more cling itself onto the outside of the grid cage. The fish will more and more crowd together between the cage 40 and the inside of the fabric, and will at last escape in through the masks 42 and into the grid cage where they are easily captured and sucked into the mouthpiece 19 of the suction hose. Thus one achieves that the fish in a controlled manner is displaced in a closed sea cage by means of a centrally placed sea pen which ensures that the bag at the end stages is formed like a vertical pipe and fish that has escaped into the pipe, are captured into the suction hose.

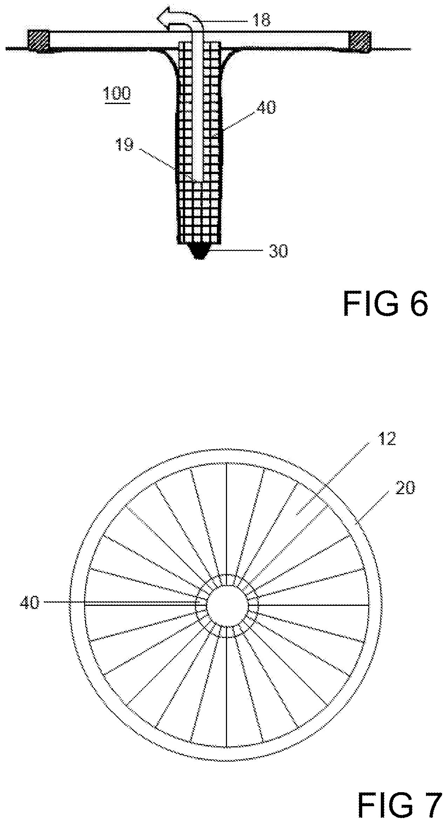

While figure 3 shows a sea pen 12 that is fully distended, figures 4 - 5 show it half emptied of water and organisms/fish. Figures 6 and 7 show the situation where the fabric sticks completely onto the grid cage.

The two plan views of figures 5 and 7 respectively, show from above how the fabric clings in ideal folds during the shrinking, so that it more and more is bent upwards and becomes laying horizontal from the sea pen edge 20 and inward to the grid cage 40, and the fabric of the sea pen bottom 30 sticks up onto the bottom of the grid cage.

In the situation according to figures 6-7 the last remains of marine organisms/fish are gathered inside of the grid cage.

The device to empty the fish from the sea pen thus comprises a grid cage which is placed down into the sea pen, and where the mouthpiece of the suction hose or pipe is placed down into the grid cage, and all fish is sucked upwards since cloth sticks onto the grid cage and the fish is displaced into the internal space. This grid cage is shown on figures 1, 2, 4, 6 and 8.

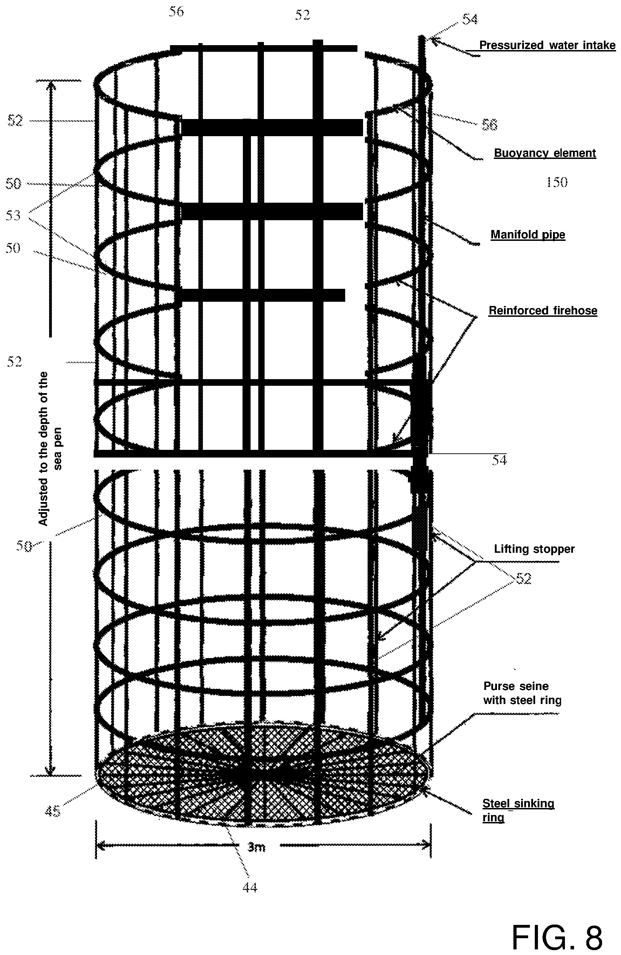

In order to displace the very last remains of fish upwardly inside the grid cage and forward to the inlet mouth piece of the hose, several solutions according to the invention may be presented, and in particular the one appearing in figure 8.

According to a first embodiment, the bottom and internal of the grid cage 40 may comprise bottom plate or a grate 44 that may be lifted and is fastened in one or more lifting lines extending downwardly from the surface along the inside of the grid cage. When the fabric at last clings onto the grate, the grate is lifted upward with possible fish which has not yet been captured by the mouth piece 19.

A grid cage which also fulfills this function, is the one shown in figure 8. This solution fulfills both functions in one structure, namely to have the sea pen fabric to cling around the outside of the grid shape, and includes a lifting mechanism enabled to guide the last remains of fish forward to the suction mouthpiece inside the grid cage.

The structure of figure 8, takes the form of an distendable fish trap having sufficiently large opening between each ring so that fish freely may pass in between the rings to the inside in the following manner and the cloth may cling to the outside.

I the specific embodiment it is composed of a plurality of individually rigid rings which create a sleeve shape when being suspended in a number of lifting straps around the ring circumference. To each ring, which may consist of metallic or plastic pipes in a stack shape, a plurality of lifting straps 52 run axially, in that each ring is fasted with a given mutual space in the axial direction. The space between two rings in the height level is so low (and the fabric is sufficient rigid) that the fabric will not particularly slip into the space between two adjacent rings due to the outside water pressure. In the upper part, a float ring 56 may be inserted which together with the bottom grate 44 contribute to the structure being stretched out when positioned in the sea. A weight ring like a sinking ring is fastened to the bottom grate, the surface of which being covered with a fine-meshed net 45. This construction contributes to keep the structure stretched out. The opening between the rings is so large that fish of all sizes may pass in to the inside. It is the sea pen fabric that sticks on to the construction that in the end will keep the fish inside the net cage, and when the net covered bottom ring is lifted upwards, one is sure that the fish will follow upwards and be sucked in through the hose/pipe 18.

The rings 50 may, instead of being made of metal or plastic tubes, be produced by hollow tubes that are distended when supplied with pressurized water. For example they comprises tubular forms like classical fire hoses, and they are supplied with sufficient pressurized water from a supply hose or pipe 54 that extends axially and vertically downwards on the outside of the construction. Each ring shaped hose is fluidly connected to the axially supply hose 54, so that when it is supplied with pressurized water, the rings 50 are distended. The construction according to figure 8 will therefore operate independently like the invention. It is submerged into the sea by lowering the lines 52 which on the surface may be gathered in one hoist line which is winded on and off a drum by means of a suitable motor. When the device is lifted upwards, fish gathered inside the grid above the grate 45 will correspondingly raise upwards and be captured into the mouthpiece of the suction hose which is directed downward internal of the device.

The last displacement may, according to an embodiment, be effected by a grate plate laying loosely in the bottom of the cage and having approximately the same periphery size as the internal of the cage. The grate is lifted upwards by means of a suitable hoisting device. Then it is not necessary to lift the whole cage, as disclosed with reference to figure 8.

In practical use, when the fabric bag at the surface attaches to the cage, the bag attaches onto in folds as shown in figures 5 and 7. The rate of displacement of fish following the water flow, depends on the amount of fish and its size. When the bag at the surface has shrinked to half of its diameter the density of the fish has increased by a rate of 3,5. Finally the bag attaches tightly around the cage. If this operation is conducted without the use of a grid cage according to the invention, one risks that the sea pen bag is completely closed at the surface while a larger water pocket is entrapped a distance below the surface.

During the emptying fish for example in the whole sea pen will have need for fresh oxygenic water. The emptying of the sea pen may therefore be made at the same time as the addition of freshwater through the pipe 60 continues. By removing more water than what is added, the sea pen will gradually empty and the sea pen fabric will more and more move inwards and attach to the outsides of grid cage. This is a preferred embodiment of the invention, since the emptying process is more easily controlled, by during the process change the rate of added and removal volume of water.

With this invention, a new and safe solution to empty a pond for water or a mixture of water and marine organisms is achieved.

## Claims

1. Method to displace a volume of water from a sea pen with a sealed sea pen fabric (12), wherein a grid-shaped cage (40,150) is arranged down in the volume of water (100) inside the sea pen, and the water is withdrawn from the sea pen through a pipe or hose (18) with an intake (19) arranged inside of the grid cage (40,150), so that the sea cage pen fabric (12) is gradually brought to squeeze up against the outside of the grid.

2. Method according to claim 1, **characterized in that** the water is withdrawn from the sea pen **in that** the hose or pipe (18) is connected to a pump (21) on the surface.

3. Method according to any of claims 1-2, **characterized in** using a rigid shaped grid cage (40), where the intake end (19) for the hose or pipe (18) is mounted centrally inside the grid cage (40).

4. Method according to any of claims 1-3, **characterized in that** the used grid cage (40) includes openings (42) of a size such that any marine organisms inside the sea pen can freely pass through the openings (42) and into the internal of grid cage, in order to be caught in the water and removed from the sea pen through the hose (18).

5. Method according to any of claims 1-4, **characterized in that** a foldable shaped grid cage (150) is used, which comprises a plurality of stiff rings mutually connected by lines, and comprising a stiff bottom plate (45) that may be lifted upwards in a final phase of the emptying towards the intake of the emptying hose, in order to ensure that marine organisms are removed from the sea pen through the hose, as there is a large enough opening (53) between each ring (50) for any marine organisms in the water volume (100) of the sea pen, to freely enter in between the rings to the inside of the grid cage before the sea pen fabric (12) clings to the outside of the sea cage.

6. Method according to claim 5, **characterized in that** pipe types in the form of hoses are used which are supplied with pressurized water through a supply hose or pipe (54) running axially and vertically downwards on the outside of the sea pen, where each ring shaped hose is fluidly connected to the supply hose (54), so that when it is supplied with pressurized water, the hose rings (50) are distended.

7. Method according to claim 5, **characterized in that** in order to maintain any requirement for fresh oxygenic rich water of any fish, the emptying of the sea pen is continuously carried out simultaneously with the continual addition of fresh water through a pipe (60), and the emptying process is controlled by changing the ratio between the added and withdrawn water volumes.

8. Combination of a sea pen with a water-tight sea pen fabric (12) and a system for displacing and removing water from said water-filled closed sea pen, wherein the system comprises a grid shaped cage (40,150) where a pipe hose (18) with an intake (19) is arranged inside the grid cage (40,150) as the hose is connected to a suction pump (21), where the system is adapted to be placed in the sea pen, wherein the water-tight sea pen fabric (12) is arranged to be gradually brought to squeeze up against the outside of the grid.

9. Combination according to claim 8, **characterized in that** the suction pump (21) is a fish pump arranged on the surface.

10. Combination according to claim 8, **characterized in that** the cage comprises a rigid shaped grid cage (40) where the intake of the hoses/pipes (18) is mounted centrally inside the grid cage.

11. Combination according to claim 8, **characterized in that** the grid cage (40) comprises openings (42) that will let any marine organisms in the sea cage pass freely through the openings (42).

12. Combination according to claim 8, **characterized in that** the cage comprises a foldable formed grid cage (150) comprising a number of stiff rings that are mutually connected by lines, and comprises a stiff bottom plate (44,45) that may be lifted upwards, where there is an opening (53) between each ring (50) of a size that will let any marine organisms in the water volume (100) of the sea pen pass freely through.

13. Combination according to claim 8, **characterized in that** the cage is and collapsible formed and comprises hollow hoses that are defended by addition of pressurized water.

14. Use of the combination according to claim 8, to carry out the method according to claim 1.

## Patentansprüche

1. Verfahren zum Verdrängen eines Wasservolumens aus einem Meereskäfig mit einem abgedichteten Meereskäfiggewebe (12), wobei ein gitterförmiger Käfig (40, 150) unten in dem Wasservolumen (100) innerhalb des Meereskäfigs angeordnet ist und das Wasser aus dem Meereskäfig durch ein Rohr oder einen Schlauch (18) mit einem Einlass (19), der innerhalb des Gitterkäfigs (40, 150) angeordnet ist, abgezogen wird, so dass das Meereskäfiggewebe (12) allmählich dazu gebracht wird, sich gegen die Außenseite des Gitters zu pressen.

2. Verfahren nach Anspruch 1, **dadurch gekennzeichnet, dass** das Wasser aus dem Meereskäfig angezogen wird, indem der Schlauch oder das Rohr (18) mit einer Pumpe (21) an der Oberfläche verbunden wird.

3. Verfahren nach einem der Ansprüche 1-2, **dadurch gekennzeichnet, dass** ein starr geformter Gitterkäfig (40) verwendet wird, wobei das Einlassende (19) für den Schlauch oder das Rohr (18) zentral innerhalb des Gitterkäfigs (40) angebracht ist.

4. Verfahren nach einem der Ansprüche 1-3, **dadurch gekennzeichnet, dass** der verwendete Gitterkäfig (40) Öffnungen (42) mit einer solchen Größe aufweist, dass jegliche Meeresorganismen im Inneren des Meereskäfigs frei durch die Öffnungen (42) und in das Innere des Gitterkäfigs gelangen können, um im Wasser gefangen und durch den Schlauch (18) aus dem Meereskäfig entfernt zu werden.

5. Verfahren nach einem der Ansprüche 1-4, **dadurch gekennzeichnet, dass** ein faltbarer, geformter Gitterkäfig (150) verwendet wird, der eine Vielzahl von steifen Ringen umfasst, die durch Leinen miteinander verbunden sind, und der eine steife Bodenplatte (45) umfasst, die in einer Endphase der Entleerung nach oben in Richtung des Einlasses des Entleerungsschlauchs angehoben werden kann, um sicherzustellen, dass Meeresorganismen durch den Schlauch aus dem Meereskäfig entfernt werden, da zwischen jedem Ring (50) eine ausreichend große Öffnung (53) vorhanden ist, damit jegliche Meeresorganismen im Wasservolumen (100) des Meereskäfigs ungehindert zwischen den Ringen in das Innere des Gitterkäfigs gelangen können, bevor das Meereskäfiggewebe (12) an der Außenseite des Meereskäfigs anhaftet.

6. Verfahren nach Anspruch 5, **dadurch gekennzeichnet, dass** Rohrtypen in Form von Schläuchen verwendet werden, die durch einen Versorgungsschlauch oder ein Rohr (54), das axial und vertikal nach unten an der Außenseite des Meereskäfigs verläuft, mit Druckwasser versorgt werden, wobei jeder ringförmige Schlauch mit dem Versorgungsschlauch (54) fluidisch verbunden ist, so dass die Schlauchringe (50) bei der Versorgung mit Druckwasser aufgeweitet werden.

7. Verfahren nach Anspruch 5, **dadurch gekennzeichnet, dass** zur Aufrechterhaltung des Bedarfs an frischem, sauerstoffreichem Wasser für jeglichen Fisch die Entleerung des Meereskäfigs kontinuierlich gleichzeitig mit der kontinuierlichen Zugabe von frischem Wasser durch ein Rohr (60) durchgeführt wird und der Entleerungsvorgang durch Änderung des Verhältnisses zwischen der zugegebenen und der entnommenen Wassermenge gesteuert wird.

8. Kombination aus einem Meereskäfig mit einem wasserdichten Meereskäfiggewebe (12) und einem System zum Verdrängen und Entfernen von Wasser aus dem mit Wasser gefüllten, geschlossenen Meereskäfig, wobei das System einen gitterförmigen Käfig (40, 150) umfasst, in dem ein Rohrschlauch (18) mit einem Einlass (19) innerhalb des Gitterkäfigs (40, 150) angeordnet ist, wobei der Schlauch mit einer Saugpumpe (21) verbunden ist, wobei das System so angepasst ist, dass es in dem Meereskäfig platziert werden kann, wobei das wasserdichte Meereskäfiggewebe (12) so angeordnet ist, dass es allmählich dazu gebracht wird, sich gegen die Außenseite des Gitters zu pressen.

9. Kombination nach Anspruch 8, **dadurch gekennzeichnet, dass** die Saugpumpe (21) eine an der Oberfläche angeordnete Fischpumpe ist.

10. Kombination nach Anspruch 8, **dadurch gekennzeichnet, dass** der Käfig einen starr geformten Gitterkäfig (40) umfasst, in dem der Einlass der Schläuche/Rohre (18) zentral innerhalb des Gitterkäfigs montiert ist.

11. Kombination nach Anspruch 8, **dadurch gekennzeichnet, dass** der Gitterkäfig (40) Öffnungen (42) aufweist, durch die jegliche Meeresorganismen im Meereskäfig frei hindurchgehen können.

12. Kombination nach Anspruch 8, **dadurch gekennzeichnet, dass** der Käfig einen faltbaren, geformten Gitterkäfig (150) umfasst, der eine Anzahl von steifen Ringen umfasst, die miteinander durch Leinen verbunden sind, und eine steife Bodenplatte (44, 45) umfasst, die nach oben angehoben werden kann, wobei es eine Öffnung (53) zwischen jedem Ring (50) von einer Größe gibt, die jegliche Meeresorganismen im Wasservolumen (100) des Meereskäfigs frei durchlassen wird.

13. Kombination nach Anspruch 8, **dadurch gekennzeichnet, dass** der Käfig zusammenklappbar ausgebildet ist und hohle Schläuche umfasst, die durch Zugabe von Druckwasser festgehalten werden.

14. Verwendung der Kombination nach Anspruch 8, zur Durchführung des Verfahrens nach Anspruch 1.

## Revendications

1. Procédé pour déplacer un volume d'eau d'un enclos marin avec un tissu étanche de l'enclos marin (12), dans lequel une cage en forme de grille (40, 150) est agencée en bas dans le volume d'eau (100) à l'intérieur de l'enclos marin, et l'eau est extraite de l'enclos marin à travers un tube ou un tuyau (18) comportant une admission (19) agencée à l'intérieur de la cage grillagée (40, 150), de sorte que le tissu de l'enclos de la cage marine (12) est progressivement entraîné à se serrer contre l'extérieur de la grille.

2. Procédé selon la revendication 1, **caractérisé en ce que** l'eau est extraite de l'enclos marin lorsque le tuyau ou le tube (18) est connecté à une pompe (21) à la surface.

3. Procédé selon l'une quelconque des revendications 1 à 2, **caractérisé par** l'utilisation d'une cage grillagée de forme rigide (40), dans lequel l'extrémité d'admission (19) pour le tuyau ou le tube (18) est montée de manière centrale à l'intérieur de la cage grillagée (40).

4. Procédé selon l'une quelconque des revendications 1 à 3, **caractérisé en ce que** la cage grillagée utilisée (40) inclut des ouvertures (42) d'une taille telle que de quelconques organismes marins contenus à l'intérieur de l'enclos marin peuvent passer librement à travers les ouvertures (42) et à l'intérieur de la cage grillagée, en vue d'être pris dans l'eau et extraits de l'enclos marin à travers le tuyau (18).

5. Procédé selon l'une quelconque des revendications 1 à 4, **caractérisé en ce qu'**une cage grillagée de forme pliable (150) est utilisée, qui comprend une pluralité d'anneaux rigides connectés mutuellement par des lignes, et comprenant une plaque de fond rigide (45) qui peut être soulevée vers le haut lors d'une phase finale de la vidange vers l'admission du tuyau de vidange, en vue d'assurer le retrait des organismes marins de l'enclos marin à travers le tuyau, étant donné qu'une ouverture suffisamment large (53) est formée entre chaque anneau (50) pour assurer l'entrée libre de quelconques organismes marins contenus dans le volume d'eau (100) de l'enclos marin entre les anneaux, vers l'intérieur de la cage grillagée avant que le tissu de l'enclos marin (12) ne s'accroche sur l'extérieur de la cage marne.

6. Procédé selon la revendication 5, **caractérisé en ce que** des types de tube en forme de tuyaux sont utilisés qui sont alimentés en eau sous pression par l'intermédiaire d'un tuyau ou d'un tube d'alimentation (54) s'étendant axialement et verticalement vers le bas sur l'extérieur de l'enclos marin, chaque tuyau de forme annulaire étant connecté par le fluide au tuyau d'alimentation (54), de sorte que lors de leur alimentation en eau sous pression, les tuyaux annuaires (50) sont distendus.

7. Procédé selon la revendication 5, **caractérisé en ce qu'**en vue de répondre à une quelconque exigence concernant de l'eau douce riche en oxygène pour un quelconque poisson, la vidange de l'enclos marin est effectuée de manière continue simultanément à l'addition continue d'eau douce à travers un tube (60), et le processus de vidange est contrôlé en changeant le rapport entre les volumes d'eau ajoutés et extraits.

8. Combinaison d'un enclos marin avec un tissus d'enclos marin étance à l'eau (12) et d'un système pour déplacer et retirer l'eau dudit enclos marin fermé rempli d'eau, dans lequel le système comprend
une cage en forme de grille (40, 150), dans laquelle un tube ou un tuyau (18) avec une admission (19) est agencé à l'intérieur de la cage grillagée (40, 150) lorsque le tuyau est connecté à une pompe d'aspiration (21), dans laquelle le système est adapté pour être positionné dans l'enclos marin, dans laquelle le tissu de l'enclos marin étanche à l'eau (12) étant agencé de sorte à être progressivement serré contre l'extérieur de la grille.

9. Combinaison selon la revendication 8, **caractérisée en ce que** la pompe d'aspiration (21) est une pompe à poissons agencée à la surface.

10. Combinaison selon la revendication 8, **caractérisée en ce que** la cage comprend une cage grillagée de forme rigide (40), l'admission des tuyaux/tubes (18) étant montée de manière centrale à l'intérieur de la cage grillagée.

11. Combinaison selon la revendication 8, **caractérisée en ce que** la cage grillagée (40) comprend des ouvertures (42) permettant le passage libre de quelconques organismes marins contenus dans la cage marine à travers les ouvertures (42).

12. Combinaison selon la revendication 8, **caractérisée en ce que** la cage comprend une cage grillagée de forme pliable (150) comprenant un certain nombre d'anneaux rigides connectés mutuellement par des lignes, et comprend une plaque de fond rigide (44, 45) pouvant être soulevée vers le haut, dans laquelle une ouverture (53) est formée entre chaque anneau (50), ayant une taille telle à permettre la traversée libre de quelconques organismes marins contenus dans le volume d'eau (100) de l'enclos marin.

13. Combinaison selon la revendication 8, **caractérisée en ce que** la cage a une forme pliable et comprend des tuyaux creux qui sont distendus par suite de l'addition d'eau sous pression.

14. Utilisation de la combinaison selon la revendication 8, pour exécuter le procédé selon la revendication 1.
